**Europäisches Patentamt**

**European Patent Office**

**Office européen des brevets**

(19)

(11) Veröffentlichungsnummer: **0 115 849**

**B1**

(12) # EUROPÄISCHE PATENTSCHRIFT

(45) Veröffentlichungstag der Patentschrift:
02.08.89

(21) Anmeldenummer: **84100996.2**

(22) Anmeldetag: **01.02.84**

(51) Int. Cl.⁴: **G 09 B 19/00,** G 09 B 19/24

(54) **Lehrmodell für Ausbildungszwecke.**

(30) Priorität: **02.02.83 DE 3303385**

(43) Veröffentlichungstag der Anmeldung:
**15.06.84 Patentblatt 84/33**

(45) Bekanntmachung des Hinweises auf die Patenterteilung:
**02.06.89 Patentblatt 89/31**

(84) Benannte Vertragsstaaten:
**AT BE CH DE FR GB IT LI LU NL SE**

(56) Entgegenhaltungen:
**GB-A-977 723
US-A-3 904 845
US-A-4 123 853
US-A-4 124 944
US-A-4 132 014**

**WELDING JOURNAL, Band 57, Nr. 4, April 1978,
Seiten 25-30; R.E. LONG u.a.: "Welding training
instructional media system"**

(73) Patentinhaber: **Welte, Walter, Wollmatinger
Strasse 181, D-7750 Konstanz (DE)**

(72) Erfinder: **Welte, Walter, Wollmatinger Strasse 181,
D-7750 Konstanz (DE)**

(74) Vertreter: **Hiebsch, Gerhard F., Dipl.- Ing.,
Erzbergerstrasse 5A Postfach 464, D-7700 Singen
1 (DE)**

### Beschreibung

Die Erfindung betrifft ein Lehrmodell zur Ausbildung von Schweißlehrlingen auf dem Gebiet des Spiegelschweißens.

Es soll mit Hilfe dieses Modells möglich sein, Auszubildende auf dem Gebiet des Spiegelschweißens zu unterrichten und deren Anlernzeit erheblich zu verkürzen.

Zur Lösung dieser Aufgabe führt, daß auf einer Sockelplatte ein von dieser aufragender Spiegel vorgesehen und diesem in Abstand wenigstens eine ein Muster aufweisende Oberfläche zugeordnet ist, die gegen eine von der Spiegelfläche bestimmte Blickrichtung abgedeckt ist und daß die Oberfläche von der Rückseite einer in Blickrichtung auf den Spiegel angeordneten, um eine parallel zur Sockelplatte sowie zum Spiegel verlaufende Gelenkachse schwenkbare Arbeitsplatte gebildet ist die Markierungsnuten aufweist, und/oder daß die Oberfläche die Außenfläche eines gestreckten Rohrstumpfes ist, der drehbar vor dem Spiegel angebracht ist und der mit wenigstens einer umlaufenden Markierungsnut als Muster versehen ist.

Dank dieser Maßgabe ist es möglich, dem Auszubildenden die Führung des Schweißkopfes eines Schweißgerätes in einer Art Trockenübung beizubringen; der Auszubildende fährt mit dem Schweißkopf an Musterlinien d. h. an den Markierungsnuten entlang, die in Blickrichtung - also für seine Augen abgedeckt liegen und nur durch den Spiegel beobachtet werden können. Es war bisher notwendig, derartige Manipulationen dem Auszubildenden am jeweiligen Einbauort selbst nahezubringen, was zu häufigen Störungen im Verlegeablauf beispielsweise von Heizungsrohren führte, darüber hinaus jedoch auch einen verhältnismäßig langen Ausbildungszeitraum in Anspruch nahm. Durch das erfindungsgemäße Lehrmodell, dessen verdeckte Muster bevorzugt austauschbar sind, ist es möglich, die erforderlichen Handgriffe in der Werkstatt zu simulieren, wozu es einer beim Erfindungsgegenstand verwirklichten Vielfalt von Einstellungen der Arbeitsfläche bedarf.

So liegt es im Rahmen der Erfindung, daß die Arbeitsplatte mit einem in Richtung zum Schweißlehrling im Abstand angeordneten Rohrstumpf versehen ist, der durch einen Drehvorgang um 180° ebenfalls dem Spiegel vorgesetzt und gleichzeitig gegen den Blick des Betrachters durch die Arbeitsplatte abgeschirmt werden kann.

Besondere Weiterbildungen sind in den Unteransprüchen gekennzeichnet.

Als vorteilhaft hat es sich erwiesen, Arbeitsplatte und/oder Spiegel - der auf einer Tragplatte festgelegt sein kann - mittels Schwenkstegen aufzuhängen, die an der Arbeitsplatte oder an der Tragplatte angelenkt und andernends mittels Stellschrauben an Lagerlaschen der Sockelplatte einstellbar angefügt sind.

Hierdurch können sowohl die Abstände der Schwenkachsen der Arbeits- oder Tragplatte gegenüber der Sockelplatte verändert als auch der Neigungswinkel zwischen Sockelplatte einerseits und Spiegeloberfläche oder Musteroberfläche verändert werden.

Da ein Verstellen des Spiegels nur in geringem Maße erforderlich ist, genügt ggf. ein einziger Schwenksteg an der Tragplattenrückenseite, wohingegen die Arbeitsplatte zwischen zwei Schwenkstegen aufgehängt ist, um bei ihr ein Drehen um 360° zu erlauben. Letztere Maßgabe erhöht die Simulationsfähigkeit der Vorrichtung erheblich.

In der Praxis hat es sich gezeigt, daß die Anlernzeit dank des beschriebenen Lehrmodells gegenüber der beschriebenen Methode vor Ort um etwa 90 % verringert werden kann.

Zum Stand der Technik wurde die US-PS4 123 853 ermittelt. Sie zeigt ein Lehrmodell für lesegestörte Kinder. Lesestörung wird durch das Wahrnehmen von Buchstaben und sonstigen Gegenständen entweder in spiegelbildlicher Form oder in vollkommener Rückwärtsform d. h. in einer um zwei getrennte Orthogonal-Achsen gedrehter Form charakterisiert. Die erstere Form heißt partielle Dyslexie, die zweite Form totale Dyslexie. Bei Vorrichtungen zum Behandeln dieser Lernschwächen werden stets Spiegel verwendet, um die Buchstaben u. dgl. zu drehen, in einer Weise entgegengesetzt zur fehlerhaften Drehung, wahrgenommen durch das zu behandelnde Kind. Die Vorrichtung nach der US-PS4 123 853 soll zusätzlich für Kinder verwendbar sein und soll zusätzlich grundlegende manipulative Fertigkeiten lehren und Lesestörungen behandeln. Diese bekannte Vorrichtung hat einen Sockel, auf dem eine Welle sitzt. Eine Anzahl von Blöcken sitzt auf der Welle und kann relativ zum Sockel gedreht werden. Ein Spiegel sitzt auf dem Sockel mit Blick zur Welle. Auf den Blöcken sind spiegelbildliche Zeichen wie z. B. Buchstaben oder Tierbilder und/oder vollkommen rückwärts verkehrt gerichtete Zeichen dieser Art angebracht. Die Blöcke können in Stellungen gedreht werden, in denen die Zeichen vom Spiegel reflektiert werden.

Es ist nicht anzunehmen, daß ein Fachmann, der Anregungen zur Ausbildung eines Lehrmodells für Schweißlehrlinge im Spiegelschweißen sucht, sich auf dem Gebiet von Lehrmodellen für lesegestörte Kinder umsieht.

Außerdem wurde die US-PS3 904 845 zum Stand der Technik ermittelt. Sie zeigt ein Verfahren und eine Vorrichtung, durch die das sog. Orbital-Schweißen von zwei feststehenden Rohren simuliert werden soll. Beim Aufbau von Rahmen, Rohrleitungssystemen, Behältern usw. müssen üblicherweise feststehende Metallrohrteile verbunden werden und zwar mittels umlaufender Schweißnäte, die nur dadurch erstellt werden können, indem der Schweißkopf längs eines schleifenförmigen oder geschlossenen Weges über die Verbindungsstellen der feststehenden Rohrteile, die zusammengebaut werden sollen, geführt wird. Dazu wurden verschiedenste Geräte entwickelt zum automatischen Führen des Schweißkopfes. Die US-PS3 904 845 will dieses Problem dadurch lösen, daß dieses Orbital-Schweißen von zwei feststehenden Rohren simuliert wird, indem zwei flache Metallstücke auf einem Tisch angeordnet werden, der auf einem Drehrahmen sitzt. Dieser Drehrahmen trägt außerdem eine Gleitbahn, längs der ein Schlitten läuft, der einen von mehreren unterschiedlichen Schweißkopfen trägt, so daß die Schweißbrenner von diesen Schweißkopfen längs der eng beabstandeten benachbarten Kanten der beiden flachen Metallstücke wandern müssen. Der Schlitten wird synchron mit der Rotation des Drehrahmens bewegt. Es ist durch diese US-PS an die Auswertung von automatischen Schweißvorgängen für die Konstruktion von Rohrleitungen für Öl und Mischfluide gedacht ebenso wie für den Aufbau von anderen Rohrkonstruktionen.

Auch diese US-PS3 904 845 kann dem Fachmann keine Anregung dafür geben, wie ein Lehrmodell auszugestalten ist, mit dem Schweißlehrlinge in der Werkstatt das Spiegelschweißen simulieren sollen.

Die Erfindung wird in der nachfolgenden Beschreibung bevorzugter Ausführungsbeispiele sowie anhand der Zeichnung näher erläutert; diese zeigt in:

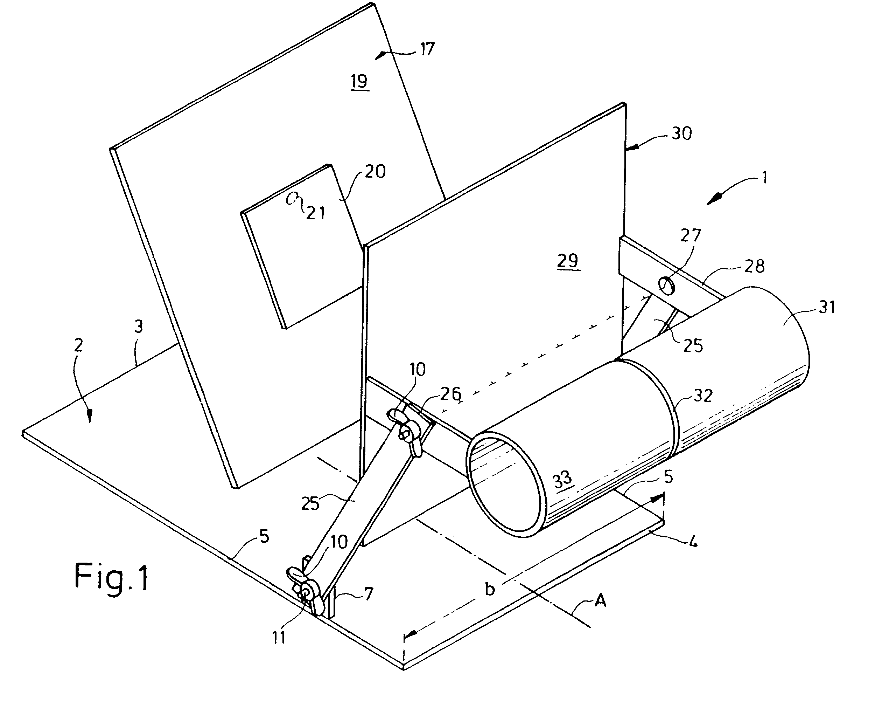

Fig. 1: eine Schrägsicht auf eine erfindungsgemäße Vorrichtung;

Fig. 2: eine gegenüber Fig. 1 verkleinerte Seitenansicht zu zwei Ausführungsformen;

Fig. 3: eine Draufsicht auf die Arbeitsplatte nach Fig. 1 und 2;

Fig. 4: einen Schnitt durch die Arbeitsplatte nach Fig. 3 nach deren Linie III-III und

Fig. 5: eine der Fig. 1 entsprechende Wiedergabe einer anderen Ausführungsform.

Ein Modell 1 für die Ausbildung von Schweißlehrlingen weist auf einer Sockelplatte 2 einer beispielsweisen Länge a von 300 mm und einer Breite b von etwas mehr als 200 mm aus Metall drei Lagerlaschen auf, von denen eine als Lagerlasche 6 in der Längsachse A der Sockelplatte 2 in einem mittleren Abstand e (z. B. 45 mm) von der Rückenkante 3 der Sockelplatte 2 sitzt und die beiden anderen Lagerlaschen 7 im mittleren Abstand f (beispielsweise 70 mm) von der Stirnkante 4 der Sockelplatte 2 an deren Längskanten 5 aufragen. Die beiden Lagerlaschen 7 bilden ein Laschenpaar mit fluchtenden Lagerbohrungen 9, in denen - eine Flügelmutter 10 tragende - Stellschrauben 11 lagern.

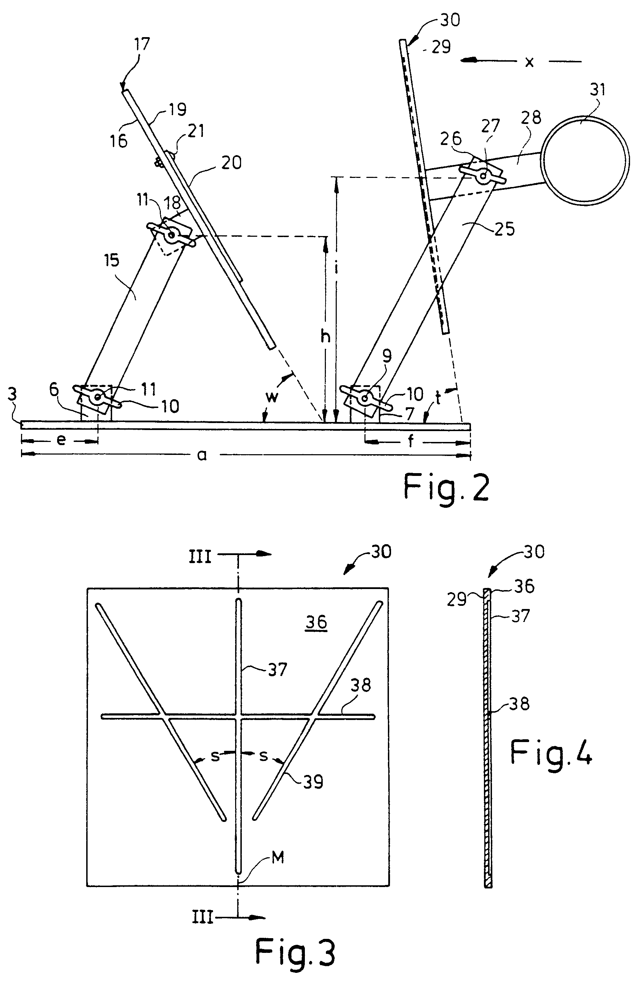

Die in Blickrichtung x (Fig. 2) hintenliegende Lagerlasche 6 ist durch eine Stellschraube 11 mit einem Schwenksteg 15 verbunden, dessen anderes Ende - ebenfalls durch eine Stellschraube 11 mit Flügelmutter 10 - gelenkig an eine von der Rückseite 16 einer Tragplatte 17 abragenden Gelenklasche 18 angeschlossen ist. Auf der Vorderseite 19 der Tragplatte 17 ist ein Metallspiegel 20 mittels einer Schraube 21 lösbar festgelegt. Dank der beiden Gelenkverbindungen 6/11/15 bzw. 15/11/18 ist die Tragplatte 17 - und damit ihr Spiegel 20 - gegenüber der Sockelplatte 2 in einem veränderlichen Neigungswinkel w einstellbar, auch ist die Höhe h der oberen Stellschraube 11 als Drehstelle der Tragplatte 19 veränderlich.

Jede Lagerlasche des Laschenpaares 7 ist ihrerseits mit einem Schwenksteg 25 in beschriebener Weise verbunden, dessen oberes Ende 26 bei 27 an einem Metallstreifen 28 angelenkt ist, der von der Frontfläche 29 einer Arbeitsplatte 30 abragt und andernends mit einem Rohrstumpf 31 fest verbunden ist, der quer zur Längsachse A verläuft. Dank der Gelenkstelle 11 an der Lagerlasche 7 einerseits und der Gelenkstelle 27 am Metallstreifen 28 anderseits kann der Abstand i zwischen der oberen Gelenkstelle 27 und der Sockelplatte 2 ebenso gewählt werden wie der Neigungswinkel t zwischen letzterer und der Arbeitsplatte 30.

Die Darstellung der Fig. 2 verdeutlicht auch eine andere Ausführung des Modells 1, die - im Gegensatz zur vorstehend beschriebenen Form - zwei Lagerlaschen 6 für die Tragplatte 17 aufweist, welche also entsprechend zur Arbeitsplatte 30 aufgehängt ist; an beiden Lagerlaschen 6 sitzt verstellbar jeweils ein Schwenksteg 15, der andernends durch die Stellschraube 11 mit der Gelenklasche 18 der Tragplatte 15 verbunden wird. So kann in bereits beschriebener Weise auch diese Tragplatte 15 zwischen dem Paar von Schwenkstegen 15 verschwenkt werden.

Über die Längsachse A ist der Rohrstumpf 31 durch eine ringförmige Markierungsnut 32 in der Außenfläche 33 des Rohrstumpfes 31 optisch unterteilt, die in den Rohrstumpf 31 eingefräst und - gegenüber dessen Farbgebung - mit einer Kontrastfarbe gefüllt ist.

Insbesondere Fig. 3 läßt erkennen, daß auch die Arbeitsplatte 30 - einer Dicke von etwa 4 mm - an ihrer Rückseite 36 in diese eingeformte lineare Markierungsnuten einer Breite von etwa 3 mm und einer Tiefe von 1,5 mm besitzt, wobei eine mittlere Markierungsnut 37 in die Mittelachse M der Arbeitsplatte 30 fällt und von einer Horizontalnut 38 gekreuzt wird; beidseits der Mittelnut 37 verlaufen - zu dieser jeweils in einem Neigungswinkel s von 30° - Schrägnuten 39.

Die beschriebenen Markierungsnuten 37 bis 39 auf der Rückseite 36 der Arbeitsplatte 30 sind farblich gegenüber dieser Rückseite 36 abgesetzt und von einem Betrachter in Blickrichtung x im Spiegel 20 zu erkennen. Dieser Betrachter ist nunmehr in der Lage, auf der Rückseite 36 der Arbeitsplatte 30 mit einem Schweißwerkzeug die bei Schweißvorgängen üblichen Bewegungsvorgänge nachzuvollziehen, um die Vorgehensweise beim Spiegelschweißen in Kürze zu erlernen.

Ein Auszubildender, der etwa im Bereich des Heizungsbaus das sog. Linksschweißen an nicht direkt überschaubaren Stellen erlernen muß, wird dank der verstellbaren Arbeitsplatte 30 in die Lage versetzt, die erforderlichen - spiegelverkehrt sichtbaren - Handhabungen simulierend zu vollziehen. Nach Verschwenken der Arbeitsplatte 30 aus der in Fig. 2 gezeigten Stellung um 180° können entsprechende Manipulationen am Rohrstumpf 31 bzw. dessen Markierungsnut 32 durchgeführt werden - und zwar dann verdeckt durch die Arbeitsplatte 30.

Im übrigen ist die beschriebene Arbeitsplatte 30 durch ein Lösen der Metallstreifen 28 von den Verstellbügeln oder Schwenkstegen 25 gegen eine Arbeitsplatte 30 mit anderem Nutenmuster 37 - 39 austauschbar.

Das Modell 1 ist insgesamt aus Metallteilen hergestellt, kann aber auch zumindest teilweise andere unflexible Werkstoffteile enthalten.

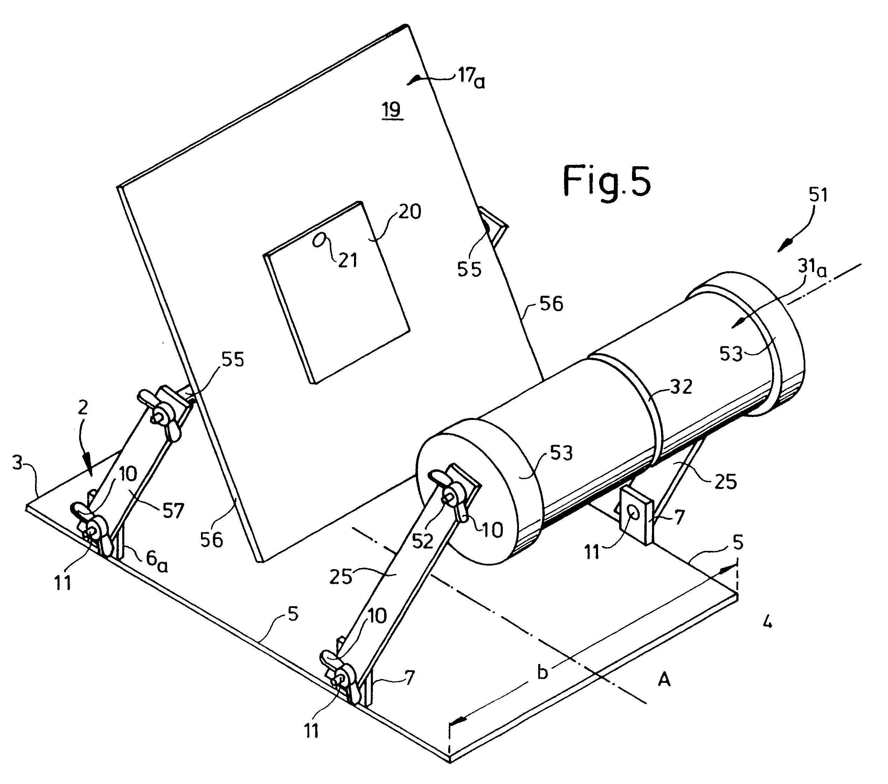

Bei dem in Fig. 5 wiedergegebenen vereinfachten Modell 51 ist zwischen den in Blickrichtung x vorderen Schwenkstegen 25 an einer Drehachse 52 - oder an entsprechenden Achsstiften - ein Rohrstumpf $31_a$ drehbar festgelegt, der mit der Markierungsnut 32 sowie endwärtigen Verschlußdeckeln 53 ausgestattet ist; an letzterer können jene Achsstifte 52 für Flügelmuttern 10 angeschweißt oder in anderer Weise befestigt sein.

Die Tragplatte $17_a$ weist hier eine rückwärtige Drehachse 55 auf, die über die Seitenkanten 56 jener Tragplatte $17_a$ hinausragen und ein hinteres Laschenpaar 57 durchsetzen. Letzteres ist sowohl an die Drehachse 55 als auch an seitliche hintere Lagerlaschen $6_a$ durch Flügelmuttern 10 angeschlossen.

## Patentansprüche

1. Lehrmodell zur Ausbildung von Schweißlehrlingen auf dem Gebiet des Spiegelschweißens
dadurch gekennzeichnet,
daß auf einer Sockelplatte (2) ein von dieser aufragender Spiegel (20) vorgesehen und diesem in Abstand wenigstens eine ein Muster (Markierungsnuten 32 bzw. 37 - 39) aufweisende Oberfläche (33 bzw. 36) zugeordnet ist, die gegen eine von der Spiegelfläche bestimmte Blickrichtung (x) abgedeckt ist, und daß die Oberfläche von der Rückseite (36) einer in Blickrichtung (x) auf den Spiegel (20) angeordneten, um eine parallel zur Sockelplatte (2) sowie zum Spiegel verlaufende Gelenkachse (27) schwenkbare Arbeitsplatte (30) gebildet ist, die Markierungsnuten (32, 37 - 39) aufweist, und/oder daß die Oberfläche die Außenfläche (33) eines gestreckten Rohrstumpfes (31, $31_a$) ist, der drehbar vor dem Spiegel (20) angebracht ist und der mit wenigstens einer umlaufenden Markierungsnut (32) als Muster versehen ist.

2. Lehrmodell nach Anspruch 1, dadurch gekennzeichnet, daß der Spiegel (20) mittels wenigstens einer zur Gelenkachse (27 bzw. 52) der Arbeitsplatte (30) bzw. des Rohrstumpfes ($31_a$) parallelen Drehachse (11, 55) begrenzt verstellbar angebracht ist.

3. Lehrmodell nach einem der Ansprüche 1 oder 2, dadurch gekennzeichnet, daß das Muster auf der Rückseite (36) der Arbeitsplatte (30) von Markierungsnuten (37 - 39) gebildet ist, die einander querend und/oder zueinander geneigt angeordnet sind.

4. Lehrmodell nach einem der Ansprüche 1 bis 3, dadurch gekennzeichnet, daß die Gelenkachse (27) der Arbeitsplatte (30) in Abstand zu deren von der mit den Markierungsnuten (37 - 39) versehenen Rückseite (36) abgekehrten Frontfläche (29) verläuft, von der Werkstoffstreifen (28) abragen, welche an Schwenkstegen (25) der Sockelplatte (2) angelenkt sind, wobei gegebenenfalls ein Werkstoffstreifen (28) von jeder der Seitenkanten der Arbeitsplatte (30) und zu dieser rechtwinkelig abragt und die Werkstoffstreifen zwischen einem Paar von Schwenkstegen (25) gegenüber der Sockelplatte (2) drehbar und stufenlos festlegbar angebracht sind.

5. Lehrmodell nach Anspruch 4 bis 6, dadurch gekennzeichnet, daß die Werkstoffstreifen (28) an ihren von der Arbeitsplatte (30) fernen Enden durch den parallel zu ihrer Gelenkachse (27) verlaufenden Rohrstumpf (31) verbunden sind, der bevorzugt kürzer ist als der Abstand zwischen den Schwenkstegen (25).

6. Lehrmodell nach einem der Ansprüche 1 bis 5, dadurch gekennzeichnet, daß der Spiegel (20) auf einer Tragplatte (17) lösbar festgelegt und diese bzw. deren vom Spiegel (20) abgekehrte Rückseite (16) oben an wenigstens einem Schwenksteg (15, 57) angelenkt ist, wobei gegebenenfalls die Oberfläche des Spiegels (20) etwa einem Viertel der die Markierungsnuten (37 bis 39) aufweisenden Rückseite (36) der Tragplatte (30) entspricht.

7. Lehrmodell nach Anspruch 6, dadurch gekennzeichnet, daß die Schwenkstege (15, 25, 57) andernends unten drehbar und stufenlos festlegbar durch Lagerlaschen (6, $6_a$, 7) mit der Sockelplatte (2) verbunden sind, wobei gegebenenfalls der Abstand zwischen den von den Lagerlaschen (6, $6_a$, 7) bestimmten unteren Drehachsen (Stellschrauben 11) der Schwenkstege (15, 25, 57) etwa dem oberen Abstand der Drehachsen (11, 27) der Schwenkstege (25) für die Arbeitsplatte (30) entspricht, und/oder daß der/die Schwenksteg/e (15) der Tragplatte (17) kürzer ist/sind als die Schwenkstege (25) für die Arbeitsplatte (30).

## Claims

1. A teaching model for training welding apprentices in the art of mirror welding characterised in that provided on a baseplate (2) is a mirror (20) which stands up therefrom and associated with the mirror (20) at a spacing is at least one surface (33 or 36) which has a pattern (marking grooves 32 and 37 - 39 respectively) and which is covered in relation to a direction of view (x) determined by the face of the mirror, and that the surface is formed by the rear side (36) of a working plate (30) which is arranged in the direction of view (x) onto the mirror (20) and which is pivotable about a pivot axis (27) extending parallel to the baseplate (2) and the mirror, the working plate (30) having marking grooves (32, 37 to 39), and/or that the surface is the outside surface (33) of an elongated tube portion (31, 31$_a$) which is disposed rotatably in front of the mirror (20) and which is provided with at least one peripherally extending marking groove (32) as the pattern.

2. A teaching model according to claim 1 characterised in that the mirror (20) is limitedly adjustably mounted by means of at least one axis of rotation (11, 55) which is parallel to the pivot axis (27 or 52) of the working plate (30) or the tube portion (31$_a$) respectively.

3. A teaching model according to one of claims 1 and 2 characterised in that the pattern is formed on the rear side (36) of the working plate (30) by marking grooves (37 to 39) which are arranged to cross each other and/or inclinedly with respect to each other.

4. A teaching model according to one of claims 1 to 3 characterised in that the pivot axis (27) of the working plate (30) extends at a spacing with respect to the front face (29) thereof, which is remote from the rear side (36) provided with the marking grooves (37 to 39), wherein projecting from the front face (29) are material strips (28) which are pivotally connected to pivotal limb portions (25) on the baseplate (2), wherein optionally a material strip (28) projects from each of the side edges of the working plate (30) and normal with respect thereto and the material strips are mounted between a pair of pivotal limb portions (25) rotatably and steplessly fixably relative to the baseplate (2).

5. A teaching model according to claims 4 to 6 characterised in that, at their ends which are remote from the working plate (30), the material strips (28) are connected by the tube portion (31) which extends parallel to the pivot axis (27) thereof and which is preferably shorter than the spacing between the pivotal limb portions (25).

6. A teaching model according to one of claims 1 to 5 characterised in that the mirror (20) is releasably fixed on a carrier plate (17) and the carrier plate or its rear side (16) which is remote from the mirror (20) is pivotally connected at the top to at least one pivotal limb portion (15, 57), wherein optionally the surface area of the mirror (20) corresponds approximately to a quarter of the rear side (36) of the carrier plate (30), which has the marking grooves (37 to 39).

7. A teaching model according to claim 6 characterised in that at the other end, at the bottom, the pivotal limb portions (15, 25, 57) are connected to the baseplate (2) by means of mounting bars (6, 6$_a$, 7) in such a way as to be rotatable and steplessly fixable, wherein optionally the spacing between the lower axes of rotation (adjusting screws 11) of the pivotal limb portions (15, 25, 57), said axes being determined by the mounting bars (6, 6$_a$, 7), approximately

corresponds to the upper spacing of the axes of rotation (11, 27) of the pivotal limb portions (25) for the working plate (30) and/or that the pivotal limb portion or portions (15) of the carrier plate (17) is/are shorter than the pivotal limb portions (25) for the working plate (30).

## Revendications

1. Modèle d'enseignement pour la formation des apprentis soudeur dans le domaine du soudage en bout à l'aide de réflecteurs caractérisé en ce que

il est prévu sur une plaque de fondation (2) un miroir (20) se dressant de celle-ci auquel est attribué à distance au moins une surface (33 ou bien 36) pourvue d'un dessin (rainures repères 32 ou bien 37 - 39) et masquée concernant une certaine direction de visée (x) déterminée par la surface du miroir et que la surface est formée par le derrière (36) d'une plaque de travail (30) ayant des rainures de repères (32, 37 - 39) et placée dans la direction de visée (x) vers le miroir (20) orientable autour d'un essieu articulé (27) placé parallèlement à la plaque de fondation (2) ainsi qu'au miroir, et/ou que la surface est la face extérieure (33) d'un tronçon de tuyau allongé (31, 31a) qui est installé de manière orientable <u>devant</u> le miroir (20) et qui est pourvu d'au moins une rainure repère annulaire (32) comme dessin.

2. Modèle d'enseignement selon la revendication 1 caractérisé en ce que le miroir (20) possède une certaine mobilité qui lui est attribuée par au moins une axe de l'articulation (11, 55) parallèle à l'essieu articulé (27 ou bien 52) de la plaque de travail (30) ou bien du tronçon de tuyau (31 a).

3. Modèle d'enseignement selon une des revendications 1 ou 2 caractérisé en ce que le dessin sur le derrière (36) de la plaque de travail (30) est fait par des rainures repères (37 - 39) qui se croisent et/ou sont inclinées l'une envers l'autre.

4. Modèle d'enseignement selon une des revendications 1 à 3 caractérisé en ce que l'essieu articulé (27) de la plaque de travail (30) est placé à distance de la surface de front (29) de celle-ci opposée au derrière (36) pourvu des rainures repères (37 - 39) de cette surface de front se dressant des bandes de matériau (28) articulées à des traverses pivotantes (25) de la plaque de fondation (2), une bande de matériau (28) se dressant, le cas échéant, de chacune des arêtes latérales de la plaque de travail (30) de manière rectangulaire et que les bandes de matériau sont installées entre un paire de traverses pivotantes (25) de manière mobile et réglable sans gradations vis à vis de la plaque de fondation (2).

5. Modèle d'enseignement selon la revendication 4 à 6 caractérisé en ce que les bandes de matériau (28) sont liées à leurs extrémites éloignées de la plaque de travail (30) moyennant le tronçon de tuyau (31) placé parallèllement a leur essieu articulé (27) et étant de préférance plus court que la distance entre les traverses pivotantes (25).

6. Modèle d'enseignement selon une des revendications 1 à 5 caractérisé en ce que le miroir (20) est fixé sur une plaque porteur (17) de manière détachable et que celle-ci ou bien son derrière (16) opposé au miroir (20) est articulé en haut à au moins une traverse pivotante (15, 57) la surface du miroir (20), le cas échéant, correspondant à environ un quart du derrière (36) de la plaque porteur (30) présentant les rainures repères (37 à 39).

7. Modèle d'enseignement selon la revendication 6 caractérisé en ce que les traverses pivotantes (15, 25, 57) sont liées à l'autre côté en bas de manière mobile et réglable sans gradations à la plaque de fondation (2) moyennant des colliers de fixation (6, 6a, 7), le cas échéant, la distance entre les axes de l'articulation en bas (vis de réglage 11) des traverses pivotantes (15, 25, 57) déterminés par les colliers de fixation (6, 6a, 7) correspond à peu près à la distance en haut des essieux articulés (11, 27) des traverses pivotantes (25) pour la plaque de travail (30) et/ou que la/les traverse(s) pivotante(s) (15) de la plaque porteur (17) est/sont plus courte(s) que les traverses pivotantes (25) pour la plaque de travail (30).

Fig.1

EP 0 115 849 B1

Fig. 2

Fig. 3

Fig. 4

Fig.5